Europäisches Patentamt

European Patent Office

Office européen des brevets

(19)

(11) Veröffentlichungsnummer : **0 091 501**
**B1**

(12) **EUROPÄISCHE PATENTSCHRIFT**

(45) Veröffentlichungstag der Patentschrift :
20.02.85

(51) Int. Cl.⁴ : **G 03 F 3/08**

(21) Anmeldenummer : 82103090.5

(22) Anmeldetag : 10.04.82

(54) **Vierfarbendruckverfahren mit tonwertabhängiger Farbrücknahme.**

(43) Veröffentlichungstag der Anmeldung :
19.10.83 Patentblatt 83/42

(45) Bekanntmachung des Hinweises auf die Patenterteilung : 20.02.85 Patentblatt 85/08

(84) Benannte Vertragsstaaten :
AT BE CH DE FR GB IT LI NL SE

(56) Entgegenhaltungen :
US-A- 2 807 660
US-A- 2 981 792
FOGRA-FORSCHUNGSBERICHT 1203, 1981, Seiten 1-
26, München, DE; G. OTSCHIK: "Untersuchungen zur
Veränderung des Farbsatzaufbaues durch geänderte
Farbauszüge für die Teilfarbe Schwarz"

(73) Patentinhaber : DR.-ING. RUDOLF HELL GmbH
Grenzstrasse 1-5
D-2300 Kiel 14 (DE)

(72) Erfinder : Jung, Eggert
Mühlenberg 25
D-2306 Schönberg (DE)

## Beschreibung

Die vorliegende Erfindung betrifft ein Vierfarbendruck verfahren mit tonwertabhängiger Farbrücknahme, wobei die Farbanteile der bunten Druckfarben Gelb (Y), Magenta (M) und Cyan (C) reduziert werden und zur Kompensation dieser Rücknahme die Farbmenge der Druckfarbe Schwarz (K) erhöht wird.

## Technisches Gebiet

Die vorliegende Erfindung bezieht sich auf das Gebiet der Drucktechnik, insbesondere des Vierfarbendrucks.

## Stand der Technik

Es ist bereits aus dem FOGRA-Forschungsbericht 1.203, Untersuchungen zur Veränderung des Farbsatzaufbaues durch geänderte Farbauszüge für die Teilfarbe Schwarz von Günter Otschik, Seite 4, rechte Spalte, unter dem Kapitel 3.1 bekannt, bei der Farbrücknahme im Vierfarbendruck möglichst mit vollständigem Unbuntaufbau zu arbeiten, wenn ein Intensiv-Schwarz, d. h. eine intensive, aber teure Druckfarbe « Schwarz », zur Verfügung steht.

Unter vollständigem Unbuntaufbau wird in der Reproduktionstechnik verstanden, daß bei der Reproduktion von Grauwerten und in den extrem tiefen Tönen nur mit « Schwarz » gedruckt wird, d. h., daß in den Farbauszügen Gelb, Magenta und Cyan an diesen Bildstellen kein bunter Farbanteil enthalten ist und gedruckt wird.

Bei billigeren in der Praxis meist verwendeten Druckfarben für die Farbe Schwarz tritt aber eine Vergrauung ein, wenn mit 100 % Schwarz gedruckt wird. Aus diesem Grunde werden die Farbauszüge der bunten Druckfarben nicht auf 0 reduziert, sondern es wird über den gesamten Tonwertbereich bei grauen Tönen bis zum äußersten Schwarz hin ein Rest an Buntfarbe gedruckt, der zu einer höheren Dichte führt, wobei dieser Restwert zu lichten Tönen hin verlaufend abnimmt.

Hierbei besteht die Gefahr, daß bei der Reproduktion von Grautönen im gesamten Tonbereich Farbstiche auftreten, wenn Schwankungen im Gleichgewicht der bunten Druckfarben Y, M, C auftreten, was während des Druckprozesses leicht geschehen kann, siehe eingangs genannten FOGRA-Forschungbericht, Seiten 3 und 4, Kapitel 1 und 2.

Ein weiterer Nachteil gegenüber der vollständigen Farbrücknahme besteht darin, daß in dem Falle, daß die Grautöne noch durch Buntanteile reproduziert werden, ein höherer Farbverbrauch an Buntfarben auftritt, als wenn mit einem Intensivschwarz gearbeitet wird.

## Aufgabenstellung

Der vorliegenden Erfindung liegt daher die Aufgabe zugrunde, eine sichere Graubalance bei niedrigem Farbverbrauch zu erreichen. Die Erfindung erreicht dies durch die im Anspruch 1 angegebenen Merkmale. Vorteilhafte Weiterbildungen sind in den Unteransprüchen 2 bis 4 angegeben.

Die Erfindung wird im folgenden anhand der Figuren 1-6 näher erläutert. Es zeigen

Figur 1a den Verlauf der Farbauszugssignale bei der Reproduktion der Grauwerte ohne Farbrücknahme (Stand der Technik),

Figur 1b den Verlauf der Farbauszugssignale bei einer Grautonwiedergabe mit Farbbalance (Stand der Technik),

Figur 2a den Verlauf der Farbauszugssignale bei einer Farbrücknahme ohne Graubalance,

Figur 2b den Verlauf der Farbauszugssignale bei der Reproduktion eines Grauwertes unter Farbrücknahme und Berücksichtigung der Graubalance,

Figur 3a den Verlauf fer Farbauszugssignale bei der farbtonabhängigen Farbrücknahme ohne Graubalance und

Figur 3b den Verlauf der Farbauszugssignale mit Graubalance.

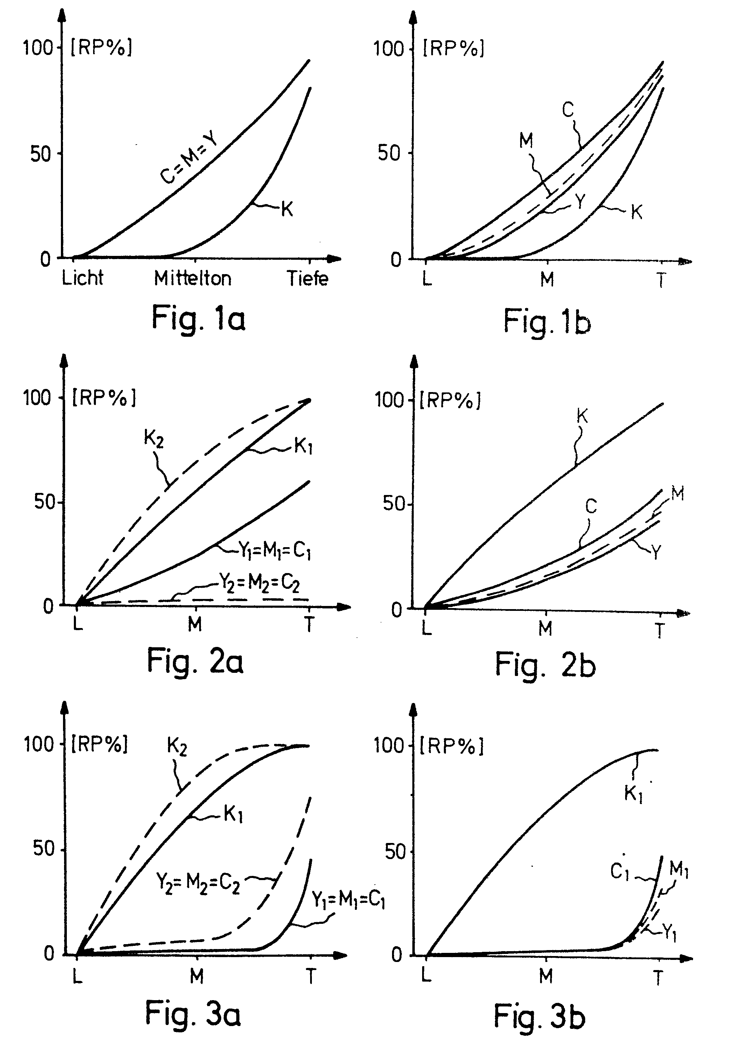

In Figur 1a sind die Farbauszugssignale über dem Tonwertbereich von lichten Tönen bis zur vollen Tiefe von 0 bis 100 Rasterpunktprozent dargestellt. Die Kurve C = M = Y stellt den Verlauf der Farbauszugssignale der bunten Farben Cyan, Magenta und Gelb dar, wie er sich ohne Farbrücknahme in Verbindung mit dem Farbauszugssignal für die Farbe Schwarz, das mit K dargestellt ist, ergibt. Im Beispiel werden bei dem tiefsten Ton 95 % Buntfarben und 80 % Schwarz gedruckt.

In Figur 1b werden die bunten Farben nicht mit gleicher Prozentzahl wie in Fig. 1a gedruckt, sondern, um eine Graubalance zu erreichen, werden die Farben Cyan, Magenta und Gelb, die durch die Kurven C, M, Y dargestellt sind, mit unterschiedlicher Prozentzahl an Rasterpunktbedeckung gedruckt. Hierdurch werden z. B. im Offsetverfahren Farbverfälschungen, die sich bei einem Übereinanderdruck gemäß Figur 1a in einer Verfälschung von Schwarz in Braun bemerkbar machen, vermieden.

Figur 2a zeigt den Verlauf der Farbauszugssignale bei einer Farbrücknahme ohne Berücksichtigung der Graubalance.

Die gestrichelt gezeichneten Kurven $Y_2 = M_2 = C_2$ sowie $K_2$ geben den Fall wieder, in dem mit einem Intensiv-Schwarz gearbeitet wird und in dem keine bunten Farben bei der Reproduktion eines Grauwertes gedruckt werde, d. h. mit völligem Unbuntaufbau gearbeitet wird.

Die durchgezogene Kurve $Y_1 = M_1 = C_1$ zeigt den Verlauf der Farbauszugssignale, wenn mit einer billigeren Druckfarbe Schwarz und mit Farbrücknahme gearbeitet wird, d. h., wenn die Farbe Schwarz entsprechend der Kurve $K_1$ gedruckt wird. In diesem Fall ist keine Graubalance berücksichtigt, da die Prozentzahlen der Rasterpunktbedeckung der bunten Farben gleich sind.

In Figur 2b wird ebenfalls mit Farbrücknahme gearbeitet, die Kurve K zeigt den Verlauf des Schwarzauszuges und die Kurven C, M und Y zeigen die Prozentzahlen der Farbauszugssignale unter Berücksichtigung der Graubalance.

In Figur 3a ist dargestellt, wie die Farbrücknahme gemäß der Erfindung in Abhängigkeit vom Tonwert vorgenommen wird. Die Kurvenverläufe sind für zwei verschiedene Druckfarben Schwarz, d. h., $K_1$ und $K_2$, angegeben, wobei die durchgezogene Kurve $K_1$ zu der durchgezogenen Kurve für die Buntfarben $Y_1 = M_1 = C_1$ gehört.

Wie aus der Figur ersichtlich, wird der vollständige Unbuntaufbau für die Reproduktion der Grauwerte zu tiefen Tönen hin möglichst lange beibehalten, und zwar bis zu einem Grauwert, der dem Vollton der verwendeten Druckfarbe Schwarz entspricht. Von diesem Grauwert ausgehend, nehmen die Farbanteile der bunten Druckfarben Y, M, C wieder zu, und zwar im Vollton bis zu einem Wert, der entweder dem Wert entspricht, den die Buntfarben ohne Farbkorrektur zur Reproduktion dieser Dichte annehmen würden oder bis zu einem vorgegebenen Wert, der sich aus dem jeweiligen Druckverfahren und den verwendeten Druckfarben ergibt.

Die gestrichelt gezeichneten Kurven $K_2$ und $Y_2 = M_2 = C_2$ sind für eine andere Druckfarbe Schwarz repräsentativ, bei der der Vollton eher erreicht wird als bei dem Beispiel der Kurven $K_1$ und $Y_1 = M_1 = C_1$. Bei den in Figur 3a dargestellten Fällen wird ohne Graubalance gearbeitet, d. h., diese Fälle sind anwendbar für Druckverfahren, bei denen sich beim Übereinanderdruck im tiefen Farbton kein Farbstich ergibt.

Es liegt auch im Rahmen der Erfindung, wenn möglichst lange zu tiefen Tönen hin mit vollständigem Unbuntaufbau und mit Graubalance gearbeitet wird, wie es zum Beispiel im Offsetdruck erforderlich ist, bei dem normalerweise die Grautöne, wenn sie mit gleicher Intensität der Buntfarben gedruckt werden, zu einem Braun verfälscht werden. Figur 3b zeigt, daß in dem Bereich der tiefen Töne eine Graubalance durchgeführt werden kann. Es können nämlich die bunten Druckfarben auch in unterschiedlicher Intensität zur Reproduktion des Grauwertes gedruckt werden, damit je nach verwendetem Papier, verwendeten Druckfarben und Druckverfahren ein echter Schwarzwert im Tiefton gedruckt wird, ohne daß Farbverfälschungen auftreten. Die exakten Werte, mit denen die einzelnen Buntfarben und die Schwarzfarbe gedruckt werden, hängen, wie bereits erwähnt, von der verwendeten Schwarzdruckfarbe, von der Beschaffenheit der Buntfarben, von dem Bedruckstoff und auch von den jeweiligen Druckverfahren ab, können aber vom Fachmann ohne weiteres durch densitometrische Ausmessung entsprechender Druckproben bestimmt werden.

## Ansprüche

1. Vierfarbendruck verfahren mit tonwertabhängiger Farbrücknahme, wobei die Farbanteile der bunten Druckfarben Gelb (Y), Magenta (M) und Cyan (C) reduziert werden und zur Kompensation dieser Rücknahme die Farbmenge der Druckfarbe Schwarz (K) erhöht wird, dadurch gekennzeichnet, daß bis zu einem Grauwert, der dem Vollton der verwendeten Druckfarbe Schwarz entspricht, mit vollständigem oder mit nahezu vollständigem Unbuntaufbau gearbeitet wird und daß von diesem Grauwert aus zur äußersten Bildtiefe hin die Farbanteile der bunten Druckfarben ansteigen.

2. Verfahren nach Anspruch 1, dadurch gekennzeichnet, daß bis zu dem Grauwert, der dem Vollton der verwendeten Druckfarbe Schwarz entspricht, mit vollständigem Unbuntaufbau gearbeitet wird.

3. Verfahren nach Anspruch 1 oder 2, dadurch gekennzeichnet, daß die Farbanteile der Buntfarben von dem Grauwert aus, der dem Vollton der verwendeten Druckfarbe Schwarz entspricht, bis zur äußersten Tiefe Werte annehmen, die in der äußersten Tiefe Werte annehmen, die in der äußersten Tiefe zu Dichtewerten führen, wie sie sich bei einer Reproduktion ohne Farbrücknahme ergeben.

4. Verfahren nach Anspruch 1 oder 2, dadurch gekennzeichnet, daß von einem Grauwert aus, der dem Vollton der verwendeten Druckfarbe Schwarz entspricht, die Buntfarben Werte annehmen, die in der äußersten Tiefe zu maximal möglichen Dichtewerten führen, die sich aus den jeweiligen Druckfarben und dem verwendeten Druckverfahren ergeben.

## Claims

1. Four-colour printing process with colour attenuation as a function of tonal value, in which the colouration proportions of the chromatic colours yellow (Y), magenta (M) and cyan (C) are reduced and the colouration quantity of the black (K) printing ink is increased to balance this attenuation, characterised in that up to a gray value which corresponds to the full tone of the black printing ink utilised, the operation is conducted with total or almost total non-chromatic structure and that starting from this gray value, and as far as the most extreme image depth, the colouration proportions of the chromatic printing inks increase.

2. Process according to claim 1, characterised in that the operation is conducted with a totally non-chromatic structure up to the gray value which corresponds to the full tone of the black printing ink utilised.

3. Process according to claim 1 or 2, characterised in that from the gray value corresponding to the full tone of the black printing ink utilised and as far as the greatest depth, the colouration proportions of the chromatic colours assume values such as they prevail in a reproduction without chromatic attenuation.

4. Process according to claim 1 or 2, characterised in that from a gray value which corresponds to the full tone of the black printing ink utilised, the chromatic colours assume values which at the extreme depth lead to maximum possible density values which derive from the printing inks in question and the printing method utilised.

## Revendications

1. Procédé d'impression en quatre couleurs, avec reprise des couleurs en fonction de la valeur de tonalité, procédé dans lequel les composantes de couleur sont réduites aux couleurs d'impression « jaune » (Y), « magenta » (M) et « cyan » (C) et dans lequel, pour compenser cette reprise, la quantité de la couleur d'impression « noir » (K) est augmentée, procédé caractérisé en ce que, jusqu'à une valeur de gris correspondant à la pleine tonalité de la couleur d'impression « noir » utilisée, on procède, selon une synthèse totalement ou presque totalement achromatique, tandis qu'à partir de cette valeur de gris, en allant vers des teintes extrêmement foncées, les composantes de couleurs d'impression augmentent.

2. Procédé selon la revendication 1, caractérisé en ce que, jusqu'à la valeur de gris correspondant à la pleine tonalité de la couleur d'impression « noir » utilisée, on procède selon une synthèse totalement achromatique.

3. Procédé selon une des revendications 1 ou 2, caractérisé en ce que les composantes des couleurs chromatiques prennent à partir de la valeur de gris, correspondant à la pleine tonalité de la couleur d'impression « noir » utilisée et jusqu'à des tonalités extrêmement foncées, des valeurs qui aboutissent, dans ces tonalités extrêmement foncées, à des valeurs de densité telles qu'elles se présentent dans une reproduction sans reprise de couleurs.

4. Procédé selon une des revendications 1 ou 2, caractérisé en ce que, à partir d'une valeur de gris correspondant à la pleine tonalité de la couleur d'impression « noir » utilisée, les couleurs chromatiques prennent des valeurs qui aboutissent à des tonalités extrêmement foncées aux valeurs maximales possibles de densité résultant des couleurs d'impression respectives et du procédé d'impression utilisés.

Fig. 1a

Fig. 1b

Fig. 2a

Fig. 2b

Fig. 3a

Fig. 3b